# EUROPEAN PATENT APPLICATION

(11) **EP 0 641 116 A1**
(43) Date of publication of application: **01.03.1995**
(21) Application number: 94305839.6
(22) Date of filing: 05.08.1994
(51) Int. Cl.: H04N 1/191, G02B 3/00, G02B 26/10

(54) **Multi-spot laser diode with microoptics for multiple beam scanning systems**

(30) Priority: 23.08.1993 US 109963
(71) Applicant: XEROX CORPORATION, Rochester New York 14644 (US)
(72) Inventor: Maeda, Patrick Y., Redondo Beach, California 90277 (US)
(74) Representative: Goode, Ian Roy

(57) **Abstract**

A raster scanning system is disclosed which utilizes micro-optics (52) for enabling the spot size (60) to be selected independent of the spot separation to generate a desired relationship between spot size and spot separation without sacrificing a significant amount of power of the light beams. The micro-optics used in this invention comprises a plurality of micro-lenses (54). Each micro-lens receives a light beam (30) from a respective lasing channel (28) of a laser light source (12) and refocuses the light on the image plane (56) of the micro-optics effectively creating a re-imaged light source, which compared to the laser light source, has the same spot separation (32) but larger spot size (60).

## Description

This invention relates to a multi-channel laser light source used in a raster output scanner and, more particularly, to a multi-beam raster output scanner.

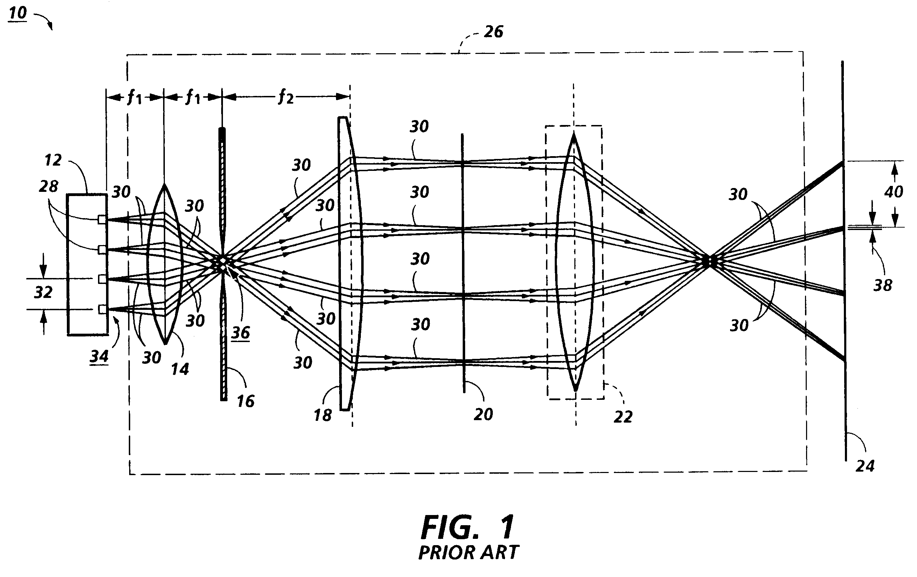

Referring to Figure 1, a sagittal view of a conventional multi-beam raster output scanner 10 is shown which utilizes a multi-channel laser diode 12, a collimating lens 14, a spot size control aperture 16, a focusing lens 18, a scanning polygon (shown only with a line 20 as one of its facets), post polygon optics 22, which for simplicity is shown by only one lens, and a photoreceptor plane 24. For the purpose of simplicity, the reflected light beams from the facet 20 are unfolded. Hereinafter, for the purpose of this application, the optical elements shown in the dashed box 26 are referred to as "common scanning optics 26".

The light source 12 comprises a plurality of lasing channels 28 for generating a plurality of light beams 30. Each lasing channel has a channel separation 32 (center to center) from its adjacent lasing channels. Also, each lasing channel generates a light beam which has a spot at the light source 12 with a spot size 34. The separation between the spots is equal to the cnannel separation 32.

In order to collimate each light beam 30, generated by the laser light source 12, the collimating lens 14 is placed one focal length f₁ away from the laser light source 12. The collimating lens 14 receives the light beams 30 from different lasing channels 28 of the laser light source 12. The collimated light beams emerging from the collimating lens 14 start converging towards each other and they all cross each other at the focal point 36. The spot size control aperture 16 is placed at the focal plane of the collimating lens 14 for clipping the light beams 30. After passing through the spot size control aperture 16, the collimated beams 30, which have crossed each other at the focal point 36, start diverging from each other. The focusing lens 18 which is placed at a distance equal to its focal length f₂ away from the spot size control aperture 16, receives the collimated beams 30 which are diverging from each other. The focusing lens 18 focuses each beam individually on the polygon facet 20 whereby they are reflected onto the post polygon optics 22. The reflected light beams 30 pass through the standard post polygon optics 22 and then each light beam 30 individually focuses to a spot with a spot size 38 on the photoreceptor plane 24. At the photoreceptor plane 24, there is a distance 40 between the centers of adjacent spots which hereinafter is referred to as "spot separation".

In multi-beam scanning systems, the spot size 38 relative to the spot separation 40 on the photoreceptor plane 24 is an important element. Simultaneous scanning of multiple spots requires a selection of a proper spot size relative to spot separation at the photoreceptor plane.

In a multi-channel laser light source, there is a limit in placing the lasing channels close to each other. If the lasing channels are placed too close to each other, then a problem known as cross-talk arises. Cross-talk happens when the information from one lasing channel leaks into the adjacent lasing channel due to the closeness of the lasing channels.

To reduce the cross-talk problem, the channel separation on the multi- channel laser light source has to be increased. However, a large channel separation causes a larger spot separation on the photoreceptor plane. Normally, due to a large channel separation on the laser light source, the spot separation on the photoreceptor is quite large compared to the spot size on the photoreceptor. Therefore, to achieve a proper spot size 38 relative to spot separation 40, either the spot size 38 or the spot separation 40 has to be individually modified. To modify the relative spot size 38 to spot separation 40, either the spot size has to be increased or the spot separation has to be decreased.

Typically, changing the spot size also changes the spot separation and vice versa since both the spot size and the spot separation are magnified by the magnification factor of the system. In the design of the conventional multi-beam raster output scanners, there is no element which can modity the spot separation or the spot size independently. Different optics used in the raster output scanners change the spot separation and the spot size at the same rate. Therefore, the relative spot size to spot separation stays the same. A conventional approach for solving this problem is to use a control aperture.

The conventional multi-beam raster output scanner 10, shown in Figure 1, utilizes a spot size control aperture 16 for modifying tne spot size. By changing the size of the control aperture 16, the spot size can be changed. The spot size has an inverse relationship with the size of the control aperture 16. For example, in order to double the spot size, the control aperture 16 should clip the beams at 63% of their diameter which results in 20% loss of power. Since there are no means to modify the spot separation independent of the spot size, in order to achieve the proper spot size 38 relative to the spot separation 40, the only option is to clip the size ot the beams at the cost of losing the power.

It is an object of the present invention to provide a multi-beam raster output scanner which enables modification of the spot size independently of the spot separation to generate a desired relationship between spot size and spot separation without sacrificing a significant amount of power of the light beams.

According to the present invention, there is provided a raster scanning apparatus comprising a multi-channel laser light source having a plurality of lasing channels for emitting a plurality of light beams, scanning means for scanning the plurality of light beams across a medium, and optical means for tocusing the light beams on the medium, characterised by a plurality of re-imaging means, associated respectively with the lasing channels, having a common image plane upon which the individual light beams produce separate spots of light, the re-imaging means being such as to produce a predetermined ratio of spot size to spot separation.

The micro-optics used in this invention comprises a plurality of micro-lenses. Each micro-lens receives a light beam from a respective lasing channel of a laser light source and refocuses the light on the image plane of the micro-optics effectively creating a re-imaged light source, which compared to the laser light source, has the same spot separation but larger spot size.

A raster scanning apparatus in accordance with the invention will now be described, by way of example, with reference to the accompanying drawings, in which:-
Figure 1 is a sagittal view of a prior art multi-beam raster output scanner; and
Figure 2 is a sagittal view of a multi-beam raster output scanner of this invention.

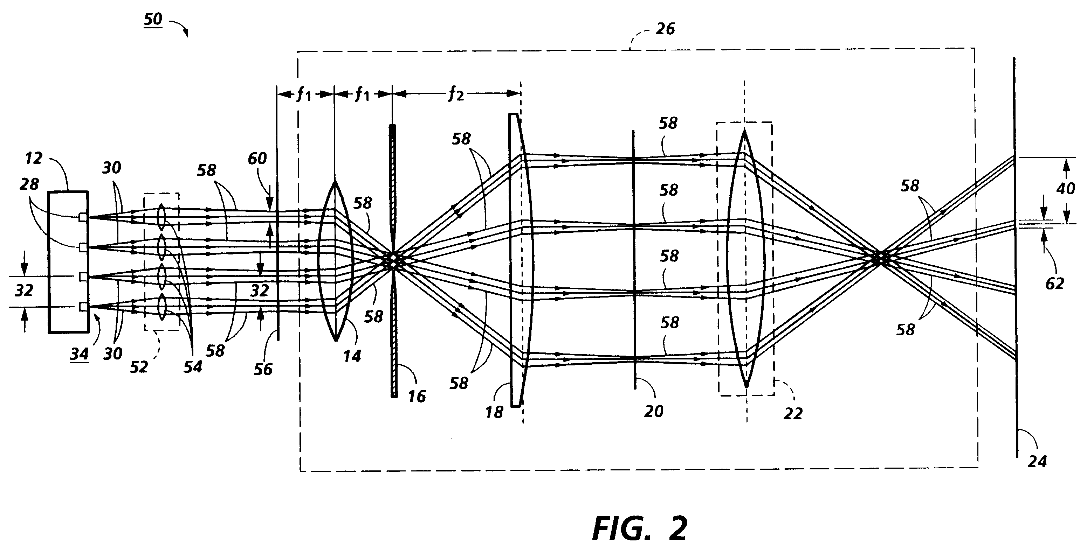

Referring to Figure 2, a raster output scanner 50 of this invention is shown which utilizes a multi-channel laser light source 12, micro-optics 52, a common scanning optics 26 and a photoreceptor 24. The micro-optics 52 receive the light beams 30 from different lasing channels 28 of the laser light source 12. The micro-optics 52 comprises a plurality of identical micro-lenses 54 which have a common image plane 56. Each micro-lens 54 corresponds to and is aligned with a lasing channel 28 on the laser light source 12. The optical axis of each micro-lens 54 coincides with the optical axis of its corresponding lasing channel 28. Each micro-lens 54 receives a light beam 30 emerging from a respective lasing channel 28 of the laser light source 12 and refocuses the light beam 30 on the image plane 56 of the micro-optics 52.

By selecting a proper magnification factor for the micro-lenses 54 in the micro-optics 52, the refocused light beams 58 can have a larger spot size 60 on the image plane 56 than the spot size 34 on the laser light source 12. It should be noted that in this process the spot separation 32 stays the same, meaning that the spot separation 32 on the laser light source 12 is the same as the spot separation 32 on the image plane 56. The micro-optics 52 creates a re-imaged multi-light source at the image plane 56, which compared to the laser light source 12, has the same spot separation 32 but a larger spot size 60.

It should be noted that for the purpose of this invention, the magnification factor of the micro-optics 52 is selected to increase the spot size 60, on the image plane 56, compared to the spot size 34 on the laser light source 12. However, if one desires to reduce the spot size while maintaining the spot separation, the magnification factor of micro-optics 56 can be selected to decrease the spot size.

It should also be noted that depending on the requirements of the scanning system, the micro-optics 52 can be designed to have a magnification factor which matches the requirements of that scanning system. However, the magnification factors of all the individual micro-lenses 54 have to be kept the same.

Referring to both Figures 1 and 2, herein the scanning system of this invention 50 (Figure 2) is compared to the prior art scanning system 10 (Figure 1). It should be noted that in comparison of the scanning systems of Figure 1 and 2, the aperture 16 of the common scanning optics 26 is left open for no clipping. The common scanning optics 26 of Figure 1 receives the light beams 30 directly from light source 12. However, the common scanning optics 26 of Figure 2 receives tne light beams 58 from the re-imaged light source at the image plane 56.

The common scanning optics 26 of Figure 1 relays the spots from the light source 12 onto the photoreceptor plane 24 and magnifies both the spot size 34 and the spot separation 32 by the magnification factor m of the common scanning optics 26. The common scanning optics 26 of Figure 2 relays the spots from the image plane 56 onto the photoreceptor plane and magnifies both the spot size 60 and and the spot separation 32 by the magnification factor m of the common scanning optics 26.

Since the spot separation 32 on the laser light source 12 is the same as the spot separation 32 on the image plane 56 and since the magnification factor of the common scanning optics 26 of both scanning systems 10 and 50 are the same, the spot separation 40 on the photoreceptor plane 24 for both scanning systems 10 and 50 will be the same. However, the common scanning system 26 of this invention (Figure 2) receives a larger spot size 60 from the image plane 56 compared to the common scanning system 26 of the prior art (Figure 1) which receives a smaller spot size 34 from the laser light source 12. Therefore, after being magnified by the magnification factor m of the common scanning optics 26, the spot size 62 on the photoreceptor plane 24 (Figure 2) generated by this invention is larger than the spot size 38 on the photoreceptor plane 24 (Figure 1) generated by the prior art.

Referring to Figure 2, it should be noted that the light beams 58 are focused on the photoreceptor plane 24. However, for the purpose of clarity, the spot size 62 on the photoreceptor plane 24 is exaggerated.

It can be observed that utilizing micro-optics in a raster scanning system provides the possibility of modifying the spot size independent of the spot separation. Consequently, by selecting a proper magnification factor for the micro-lenses, a desired relative spot size to spot separation can be achieved.

In operation, the aperture 16 of the common scanning optics 26 can be used for fine tuning. During the assembly of the raster scanning system, the aperture 16 can be slightly adjusted to acquire a precise spot size on the photoreceptor plane 24. Once the precise spot size is acquired, then the aperture 16 will be fixed.

It should be noted that the micro-optics used in this invention can be fabricated on the same substrate as the substrate of the laser light source. Fabricating the micro-lenses and the laser light source on the same chip eliminates the alignments of micro-lenses with the respective lasing channels of the laser light source.

## Claims

1. A raster scanning apparatus comprising a multi-channel laser light source having a plurality of lasing channels for emitting a plurality of light beams, scanning means for scanning the plurality of light beams across a medium, and optical means for focusing the light beams on the medium, characterised by a plurality of re-imaging means, associated respectively with the lasing channels, having a common image plane upon which the individual light beams produce separate spots of light, the re-imaging means being such as to produce a predetermined ratio of spot size to spot separation.

2. A raster scanning apparatus comprising:
a multi-channel laser light source having a plurality of lasing channels for emitting a plurality of light beams;
each of said plurality of light beams having a spot at said laser light source;
each of said spots having a given spot size;
each of said spots being separated from an adjacent spot by a given spot separation;
a plurality of substantially identical re-imaging means having a common image plane;
the number of said plurality of re-imaging means being equal to the number of said lasing channels of said laser light source;
said plurality of re-imaging means being located in the path of said plurality of light beams from said laser light source in such a manner that each re-imaging means is located in the path of a light beam from a corresponding lasing channel for receiving said light beam from said corresponding lasing channel and re-imaging said light beam from said corresponding lasing channel onto said image plane;
each of said plurality of re-imaging means being so constructed and arranged relative to the other re-imaging means to change said given spot size while maintaining said spot separation on said image plane;
a medium;
a scanning means located in the path of said plurality of light beams from said image plane and being so constructed and arranged to scan said plurality of light beams in a tangential plane across said medium; and
means for focusing said plurality of light beams onto said medium in both the tangential and sagittal planes.

3. The raster scanning apparatus of claim 1 or claim 2, further comprising: collimating means located in the path of said plurality of light beams between said image plane and said scanning means and being so constructed and arranged to collimate said plurality of light beams.

4. The raster scanning apparatus of any one of claims 1 to 3, wherein said plurality of re-imaging means increase said spot size at said imaging plane.

5. The raster scanning apparatus of any one of claims 1 to 4, wherein said plurality of re-imaging means are micro-lenses.

6. The raster scanning apparatus of any one of claims 1 to 5 wherein the re-imaging means are formed in the same substrate as the lasing channels.
